(19) **Europäisches Patentamt / European Patent Office / Office européen des brevets**

(11) **EP 2 486 425 B1**

(12) **FASCICULE DE BREVET EUROPEEN**

(45) Date de publication et mention de la délivrance du brevet:
**01.04.2020 Bulletin 2020/14**

(21) Numéro de dépôt: **10767973.0**

(22) Date de dépôt: **04.10.2010**

(51) Int Cl.:
*G01T 1/29* (2006.01)    *G01T 7/00* (2006.01)

(86) Numéro de dépôt international:
**PCT/EP2010/064732**

(87) Numéro de publication internationale:
**WO 2011/042383 (14.04.2011 Gazette 2011/15)**

(54) **PROCEDE DE TRAITEMENT DE DONNEES ISSUES D'UN DETECTEUR DE RAYONNEMENTS IONISANTS**

VERFAHREN ZUR VERARBEITUNG VON DATEN AUS EINEM DETEKTOR FÜR IONISIERENDE STRAHLUNG

METHOD FOR PROCESSING DATA FROM AN IONIZING-RADIATION DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2009 FR 0956992**

(43) Date de publication de la demande:
**15.08.2012 Bulletin 2012/33**

(73) Titulaire: **Commissariat à l'Énergie Atomique et aux Énergies Alternatives 75015 Paris (FR)**

(72) Inventeurs:
• **MONTEMONT, Guillaume 38000 Grenoble (FR)**
• **BORDY, Thomas 38600 Fontaine (FR)**
• **GROS D'AILLON, Eric 38210 Vourey (FR)**

(74) Mandataire: **Ilgart, Jean-Christophe et al Brevalex 95, rue d'Amsterdam 75378 Paris Cedex 8 (FR)**

(56) Documents cités:
**EP-A1- 1 739 456      WO-A2-2007/144589 DE-A1- 19 721 323**

• **GUILLAUME MONTEMONT ET AL: "CZT pixel detectors for improved SPECT imaging", NUCLEAR SCIENCE SYMPOSIUM CONFERENCE RECORD, 2008. NSS '08. IEEE (19-25 OCT. 2008), IEEE, PISCATAWAY, NJ, USA, 19 octobre 2008 (2008-10-19), pages 84-89, XP031419399, ISBN: 978-1-4244-2714-7**

**Description**

La présente invention a trait à un procédé de caractérisation d'une source de rayonnement électromagnétique ou ionisant basé sur des données issues d'un détecteur de rayonnements ionisants, et plus particulièrement un détecteur en matériau semi-conducteur polarisé par au moins deux électrodes disposées de part et d'autre du volume constitué par ce détecteur.

Elle peut trouver emploi entre autres dans la médecine nucléaire, la scintigraphie, la tomographie d'émission monophotonique (procédé TEMP), et en général pour tous les procédés où le rayonnement produit des interactions, ou événements, dans le détecteur, qu'on cherche à distinguer en les enregistrant de manière à établir un histogramme de ces événements en fonction de paramètres caractérisant ces derniers. Les paramètres peuvent être de natures variées. Un exemple courant est toutefois celui de l'image d'un objet d'où provient le rayonnement, les paramètres de l'histogramme étant alors des coordonnées géométriques. Les points de l'histogramme expriment les nombres ou densités d'occurrence des événements mesurés pour les valeurs correspondantes des paramètres.

Les rayonnements ionisants sont mesurés par des caméras gamma ou des dispositifs analogues comprenant des éléments sensibles en semi-conducteurs où le rayonnement est transformé en charges électriques induites, représentées par des électrons ou des trous dans la matière semi-conductrice. Des électrodes de polarisation sont ajoutées pour attirer ces charges, et les mesures consistent à enregistrer certains paramètres des signaux impulsionnels produits par les électrodes. Ces signaux impulsionnels résultent du mouvement et de la collecte éventuelle de porteurs de charges par une électrode. En effet, le déplacement relatif d'un porteur de charge par rapport à une électrode peut induire une charge dans cette dernière, sans pour autant que ledit porteur de charge soit collecté par cette électrode. C'est par exemple le cas lorsqu'un porteur de charge se déplace à proximité d'une électrode isolée de la matière semi-conductrice par une couche d'isolant. Dans le cas d'électrodes collectantes, on peut mesurer des charges collectées et des charges induites.

Selon l'art antérieur, les interactions de particules électromagnétiques ou ionisantes dans un matériau semi-conducteur génèrent des signaux électriques au niveau des électrodes reliées au matériau détecteur. Par relier, on entend une liaison directe, l'électrode étant au contact du matériau semi-conducteur, ou une liaison capacitive, l'électrode étant alors séparée du milieu semi-conducteur par une fine couche d'un matériau diélectrique. Les signaux mesurés par les électrodes sont ensuite traités et enregistrés durant une certaine période, appelée période d'acquisition, afin de constituer un spectre de mesure. Il est très fréquent d'utiliser des spectres monodimensionnels, ces spectres correspondant à un histogramme de l'amplitude des charges collectées par une ou plusieurs électrodes collectantes durant une période de temps déterminée.

La mesure souffre toutefois d'imperfections qui proviennent en particulier de propriétés de transport imparfaites des électrons et des trous dans la matière semiconductrice. La mesure d'un événement dépend donc, entre autres, du trajet des charges générées et du lieu de provenance de l'événement. On a déjà envisagé de corriger des spectres biparamétriques pour tenir compte de ces disparités et obtenir un histogramme plus correct des événements. Les méthodes de correction peuvent s'appuyer sur des corrélations entre l'amplitude et la durée d'une impulsion pour corriger leurs paramètres caractéristiques d'après certains critères.

Ces méthodes utilisent des spectres biparamétriques, selon lesquels chaque point de l'histogramme correspond à une interaction, ou événement, classée par exemple en fonction de l'amplitude d'une impulsion collectée par une électrode, et de la durée de ladite impulsion. Un code couleur permet d'identifier le nombre d'occurrences aux différents points de l'histogramme durant la période d'acquisition. L'utilité, la construction et le traitement de tels spectres biparamétriques sont par exemple décrites dans les brevets US 5,854,489, EP 0 703 751, 1 058 128, 1 004 040 et 1 598 680 .

Le brevet EP 1 037 070 décrit comment on peut utiliser ce spectre biparamétrique: pour cela, on utilise une calibration du détecteur selon un rayonnement d'énergie donnée pour obtenir un scalaire, qui correspond à un nombre d'événements dans une fenêtre d'énergie donnée.

Une autre cause encore est le partage des charges quand une des électrodes, en général l'anode, est segmentée en électrodes élémentaires affectées chacune à une détection distincte, ce qui est très fréquemment choisi quand on veut disposer s'une indication supplémentaire sur la localisation des charges, et donc de l'origine du rayonnement: le nuage de charges produites par une particule est souvent assez étendu pour influencer plusieurs des électrodes élémentaires, qui mesurent chacune une fraction du signal produit par l'événement; la résolution en énergie des mesures est diminuée et des particules ionisantes échappent à la détection. Un mode de détection et de correction de ces erreurs est proposé dans EP 1 739 456.

D'autres méthodes s'appliquent à exploiter les mesures de façon particulière pour affiner la localisation de la source du rayonnement. On peut citer les brevets US 6 002 741, 6 169 287, l'article de Warburton "An approach to sub-pixel spatial resolution in room temperature x-ray detector arrays with good energy resolution," Materials Research Society symposium proceedings, vol.487, 1997, pp.531-536 et l'article de Jaecheon Kim et autres, "Three-dimensional signal correction on U1traPeRL CZT detectors", Nuclear Science Symposium Conference Record, 2007. NSS'07.IEEE, pp.1289-1293. Mais ces procédés aussi sont insuffisants, notamment parce qu'ils sont en général consacrés à la correction d'une seule cause de perturbation et conviennent donc seulement à certaines situations de mesure, ou donnent une localisation incomplète.

L'invention a pour objet de perfectionner ces procédés de traitement de données de signaux électriques représentatifs d'un rayonnement afin d'améliorer l'histogramme des événements, et qui soit à la fois simple et d'utilisation plus universelle que d'autres des procédés de corrections mentionnés ci-dessus, afin de pouvoir s'attaquer simultanément à plusieurs causes de perturbations des mesures, et quels que soient les paramètres utilisés pour définir les spectres des mesures et les événements.

Les documents WO-A-2007/144589 et DE-A-197 21 323 représentent des exemples de procédés où des probabilités d'acceptation des événements sont exploitées pour corriger des histogrammes de mesure.

L'invention concerne un procédé de caractérisation d'une source de rayonnement électromagnétique selon la première revendication.

Les probabilités d'acceptation dépendent seulement de la nature du rayonnement ayant produit l'événement et sont établies indépendamment des mesures qui donnent naissance à l'histogramme des événements, éventuellement avant ces mesures. La façon la plus simple de pondérer les événements mesurés consiste à multiplier point par point l'histogramme des événements avec leurs probabilités d'acceptation respectives. Elles permettent de pondérer l'importance que l'on souhaite attribuer à chaque événement en fonction de ses coordonnées sur l'histogramme.

On peut également réaliser cette pondération en attribuant à chaque événement un facteur de pondération en fonction des paramètres le caractérisant, avant la constitution de l'histogramme, ou au cours de sa constitution.

Comme les probabilités d'acceptation sont obtenues par une double calibration où le détecteur est irradié par des rayonnements différant quant à un critère d'acceptation des événements, il est facile de distinguer l'influence de ce critère même sans bien connaître ses effets.

On pourra alors établir la probabilité $P(S/X)$ d'acceptation d'un événement $(X)$ d'après une probabilité du critère d'acceptation $(S)$ du rayonnement, et égale à

$$\frac{P(X/S).P(S)}{P(X)},$$

où $P(X/S)$ correspond à la probabilité d'occurrence de l'événement $X$ pour du rayonnement présentant toujours le critère $(S)$ dans la première calibration, $P(S)$ correspond à la probabilité du critère $(S)$ dans la seconde calibration et $P(X)$ correspond à la probabilité d'occurrence, ou distribution, de l'événement $(X)$ dans la seconde calibration.

Des résultats issus de connaissances théoriques ou d'hypothèses pourront aussi compléter une calibration.

L'invention pourra être appliquée à de nombreuses situations. Les paramètres caractérisant les événements pourront être extraits des signaux de charge mesurés par des électrodes choisies parmi :

- au moins une cathode ;
- l'anode ayant collecté la charge la plus importante ;
- l'ensemble des anodes ayant collecté des porteurs de charge ;
- l'ensemble des anodes voisines de celles ayant collecté les porteurs de charge ;
- l'ensemble des anodes.

On peut extraire des signaux produits par un des ensembles d'électrodes énumérés ci-dessus :

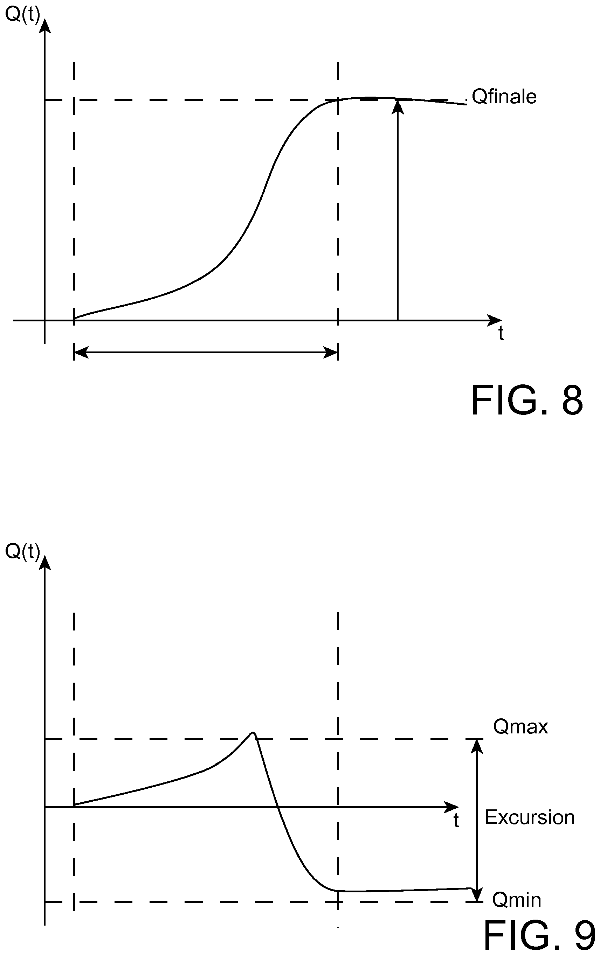

- les valeurs finales, comme la valeur Q finale d'un signal typique de la figure 8;
- des valeurs transitoires (par exemple les valeurs maximum ou minimum ou une valeur à un instant donné);
- des combinaisons de valeurs mesurées à différents instants (par exemple les excursions, correspondant à une différence d'une valeur maximum et d'une valeur minimum d'un signal transitoire et dont une illustration est un autre signal typique de la figure 9, où l'excursion est indiquée entre les valeurs extrêmes $Q_{max}$ et $Q_{min}$;
- des valeurs correspondant à une grandeur temporelle, par exemple les durées s'écoulant entre le début des impulsions et leur fin (temps de montée).

Les valeurs mesurées par différentes électrodes peuvent être combinées pour former un paramètre. Ainsi, un paramètre peut correspondre à une valeur mesurée par une électrode, ou à une combinaison de valeurs mesurées par une ou plusieurs électrodes. On peut par exemple réaliser une addition de valeurs mesurées par plusieurs électrodes, en extraire la plus élevée ou en déterminer un barycentre, c'est-à-dire la somme des coordonnées de certaines électrodes pondérées par les valeurs extraites de ces électrodes.

Par charge mesurée, on entend une charge collectée (lorsque l'électrode est collectante) ou une charge induite (lorsque l'électrode n'est pas collectante), ou, dans le cas d'une électrode collectante, de l'addition de charges collectées et induites.

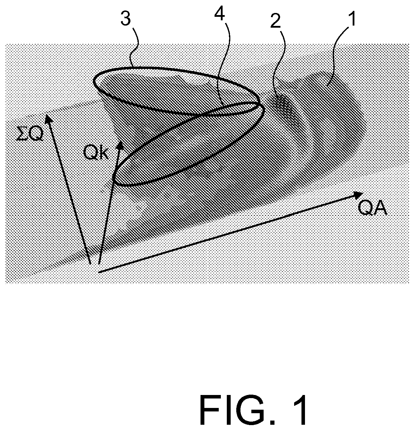

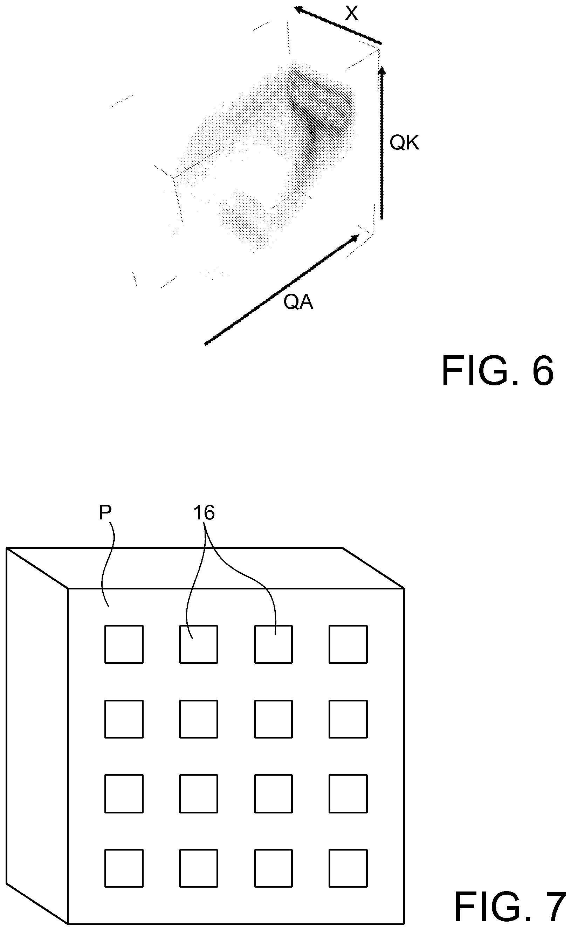

Aussi, selon les cas, chaque interaction peut être représentée dans un espace à n dimensions, n étant le nombre de paramètres la caractérisant. Une interaction détectée correspond à un événement de coordonnées (x1, x2, ..xn) dans cet espace. Un exemple de graphe d'événements est donné à la figure 1, sur laquelle on reviendra. Les paramètres sont, pour chacun des événements, la charge électrique totale mesurée sur une anode, la charge électrique totale mesurée sur la cathode commune, et la charge totale mesurée sur les anodes voisines. Dans ce cas, le détecteur est polarisé par une seule cathode disposée en vis-à-vis d'une pluralité d'anodes élémentaires segmentées. La figure 6 illustre un autre exemple, où les paramètres des événements sont la charge totale QA reçue par l'anode ayant collecté le plus de charges, la charge totale QK reçue par la cathode, et les coordonnées X et Y du barycentre, obtenu en effectuant la somme des coordonnées des électrodes voisines à l'électrode ayant collecté le plus de charges relativement au centre de cette dernière électrode, pondérée par les valeurs des excursions de charge mesurées sur ces électrodes voisines. La figure 6 est en réalité une projection en Y de ce spectre à quatre paramètres qui n'est pas représentable par une figure unique; le spectre complet serait une collection de ces projections à des valeurs différentes de Y. Généralement, une acquisition correspond à l'enregistrement de plusieurs interactions durant un temps déterminé. Au cours d'une acquisition, on construit classiquement un histogramme représentant, pour chaque point de l'espace des paramètres, le nombre d'événements mesurés correspondant à ces paramètres. Lorsque le nombre de paramètres est de 2 ou 3, il est usuel d'utiliser un code couleur, en affectant, pour l'ensemble des points de l'espace, une correspondance entre une couleur donnée et le nombre d'événements mesurés correspondant aux paramètres définis par ces points.

Les critères régissant les probabilités d'acceptation d'un événement, et dont il faut éliminer l'influence ou qu'il faut au contraire mettre en valeur selon les cas, peuvent être :

- les défauts d'homogénéité de détection d'une charge ionisante ;
- son origine, c'est-à-dire le lieu où elle a été générée;
- la nature du rayonnement, ce dernier pouvant être diffusé ou direct ;
- l'étendue spatiale de la source ;
- le partage des charges créés par une interaction entre électrodes élémentaires;
- l'énergie du rayonnement;
- l'isotope ou la composition isotopique de la source ; etc.

Un même jeu de mesures peut se voir affecter plusieurs séries de probabilités d'acceptation pour isoler telle ou telle partie du rayonnement.

L'invention sera maintenant décrite au moyen des figures suivantes :

- la figure 1 est une vue d'un histogramme d'événements représenté en trois dimensions,
- la figure 2 est une coupe de cet histogramme représenté en deux dimensions,
- la figure 3 est la même coupe après application de l'invention,
- la figure 4 illustre un dispositif de prise de mesures,
- la figure 5 est un organigramme succinct de l'invention,

- la figure 6 est un autre exemple d'histogramme d'événements,
- la figure 7 est une représentation d'un détecteur,
- et les figures 8 et 9 sont des représentations signal de signaux.

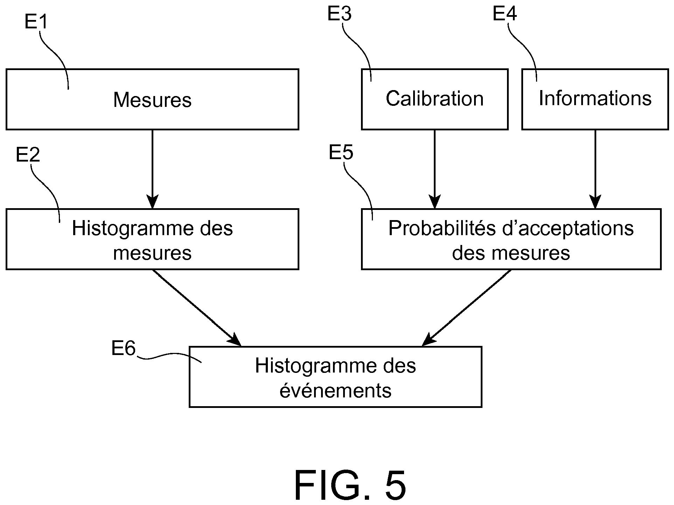

On décrit d'abord la figure 5. Le procédé peut consister, après avoir pris les mesures (étape E1) et avoir composé un histogramme des événements (E2) de façon classique selon au moins un, préférentiellement au moins deux de leur paramètres, à faire au moins une calibration (E3), à laquelle on peut adjoindre de l'information supplémentaire (E4), pour en déduire des probabilités d'acceptation de chaque mesure (E5), généralement sous forme d'un ensemble cohérent avec l'histogramme des événements mesurés ou à mesurer. Par cohérent, on entend qu'on détermine des probabilités d'acceptation pour des événements ayant au moins un paramètre en commun avec les paramètres que l'on considère lors des mesures. La combinaison des événements et de ces probabilités, généralement par des calculs de pondération, donne un nouvel histogramme des événements (E6) dans lequel des erreurs affectant les mesures ont été corrigées. La calibration (E3) permettant de déduire les probabilités d'acceptation peut être entreprise avant ou après les mesures. Il s'agit d'une opération indépendante, réalisée dans des conditions de calibration particulières comme on le verra dans les exemples.

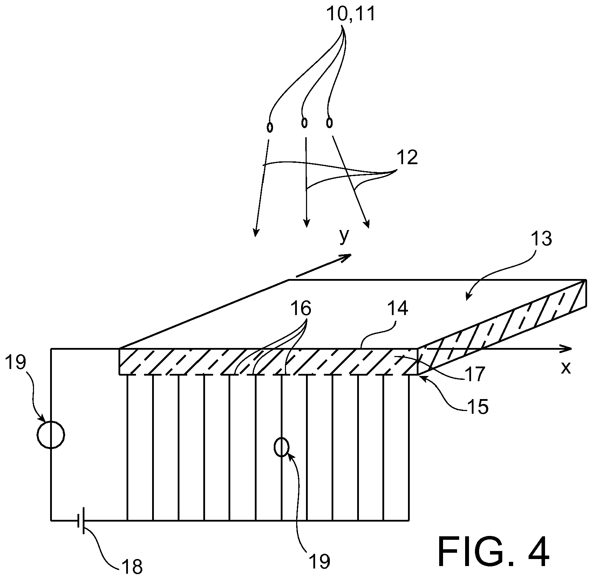

Un exemple de dispositif de mesure selon l'invention est illustré à la figure 4. Une ou plusieurs sources 11 émettent un rayonnement 12 vers un détecteur 13 comprenant une cathode 14 continue, une anode 15 divisée en anodes élémentaires 16 juxtaposées, une couche de matière semi-conductrice 17 intermédiaire à la cathode 14 et à l'anode 15, un circuit à générateur de tension continue 18 entre la cathode 14 et l'anode 15, et des dispositifs de mesure de courant 19 et de chacune des anodes élémentaires 16 (une seule d'elles étant représentée). Ces dispositifs 19 sont sensibles aux charges électriques qui sont générées lors des interactions ou événements dans la matière semi-conductrice 17 à l'impact d'une particule du rayonnement 12 et sont attirées vers l'anode 15 ou la cathode 14 selon leur signe. Les anodes élémentaires 16 permettent de localiser les charges dans le plan du détecteur 13 selon des coordonnées (x,y).

Certains exemples de réalisation de l'invention seront maintenant donnés.

Exemple n°1: On cherche ici à éliminer le rayonnement diffusé pour un détecteur CZT (ou CdZnTe) dans une situation où un partage de charges entre anodes élémentaires voisines de l'anode collectrice des électrons peut apparaître. L'histogramme des événements peut être fonction de trois paramètres:

- la charge finale QA (charge électrique totale pendant la durée de l'arrivée des particules) mesurée à l'anode considérée pour un événement, cette anode étant celle dont la charge finale QA est la plus élevée

- la charge finale de la cathode QK (correspondant à la charge algébrique mesurée sur l'ensemble des anodes, au signe près) ;
- la somme des charges finales $\sum Q$ mesurées sur les anodes collectantes voisines de l'anode considérée.

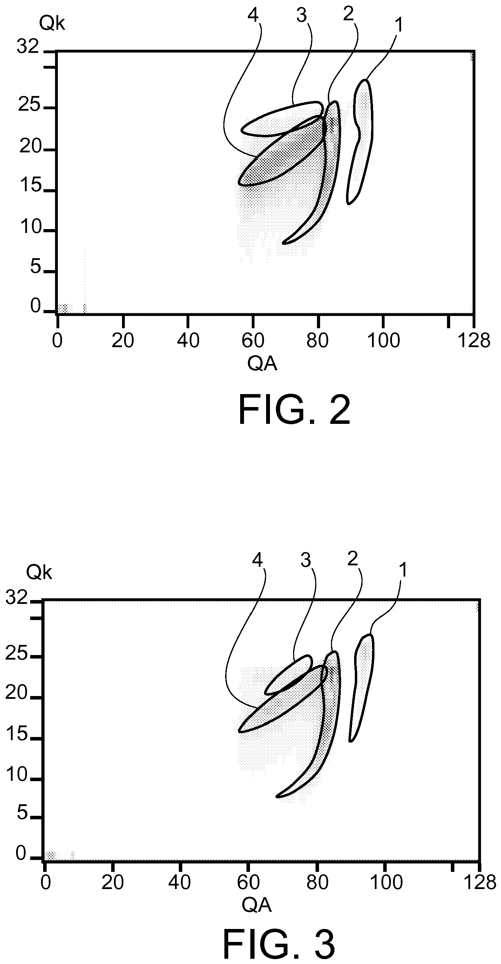

La figure 1 est une représentation d'un histogramme tridimensionnel des événements et la figure 2 celle d'une coupe de cet histogramme pour une valeur fixe du troisième paramètre ($\sum Q$). Les valeurs de l'histogramme correspondent à des nombres ou des densités d'événements aux coordonnées considérées. On remarque quatre lieux de mesures principaux dont les deux premiers 1 et 2 correspondent à des irradiations produites par des groupes de particules ayant des énergies différentes, le lieu 3 à des charges partagées entre différentes anodes élémentaires et le lieu 4 à des charges résultant du rayonnement diffusé et dont il faut éliminer l'influence.

On y parvient par des opérations de calibration. Une première calibration consiste à faire mesurer par le détecteur le rayonnement provenant d'une source en l'absence complète de rayonnement diffusé. Une source nue satisfait à ce critère. On obtient un histogramme fondé sur les mêmes paramètres que celui de la figure 1 mais dont les valeurs des points sont notées P(X/S), exprimant les événements par des probabilités P de la valeur X en présence du caractère S (absence de rayonnement diffusé).

Dans une seconde calibration, la même source, ou éventuellement une source différente, est mise dans une situation où elle est émettrice d'une grande quantité de rayonnement diffusé, par exemple plongée dans l'eau, et son rayonnement est mesuré par son détecteur pour donner encore un histogramme noté P(X). Cette seconde calibration correspond généralement à une situation d'acquisition, au cours de laquelle P(S) est maîtrisé.

Il faut encore déterminer la proportion du rayonnement non diffusé parvenant au détecteur, notée P(S), pendant cette seconde calibration. Cela peut être fait par une simulation par une méthode de Monte-Carlo, ou par expérience. Cette seconde calibration peut correspondre à une situation d'acquisition, au cours de laquelle P(S) est maîtrisé.

On calcule alors une probabilité d'acceptation de chaque évènement de l'histogramme de la figure 1, notée P(S/X), par la formule

$$P(S/X) = P(X/S) \times \frac{P(S)}{P(X)} \ .$$

On exploite en fait une formule classique des probabilités conditionnelle de Bayes, dont le résultat est un nouvel histogramme fonction des mêmes paramètres que celui de la figure 1.

L'étape finale du procédé consiste à pondérer l'histogramme de la figure 1 par l'ensemble des probabilités d'acceptation, c'est-à-dire de faire leur produit point par point. Si la calibration a été effectuée convenablement, les probabilités d'acceptation sont très faibles au lieu 4 de l'histogramme de la figure 1, ce qui réduit fortement son contenu dans l'histogramme finalement obtenu (celui de la figure 3) et fait donc ressortir les événements enregistrés aux lieux 1, 2 et 3. Il est bien entendu que cette pondération pourrait être réalisée au fur et à mesure de la constitution de l'histogramme de mesure, en affectant à chaque événement un facteur pondération dépendant d'un ou plusieurs paramètres qui le caractérisent.

Il est possible de compliquer cet exemple en considérant deux sources d'indices 1 et 2 délivrant un rayonnement mono-énergétique dont l'énergie est respectivement E1 et E2. Le caractère S recherché peut correspondre à une situation S=S1 où l'énergie du rayonnement à mesurer est égale à E1 et S=S2 où l'énergie du rayonnement à mesurer est égale à E2. Les étapes de calibration décrites précédemment sont alors effectuées séparément avec une source du rayonnement d'énergie E1 et une source du rayonnement d'énergie E2. On en déduit deux groupes de probabilités d'acceptation P(S=S1/X) et P(S=S2/X) par des formules analogues

$$P(S = S1/X) = P(X/S = S_1) \times \frac{P(S = S_1)}{P(X)} \ ,$$ et

la même chose pour S=S2. En multipliant l'histogramme expérimental par chacun des histogrammes de probabilité d'acceptation ainsi obtenus, on peut faire ressortir les mesures correspondant à l'énergie E1 et celles correspondant à l'énergie E2, ce qui peut aider à distinguer les lieux 1 et 2 dans le cas de la figure 1.

Cette situation sera particulièrement utile dans le cadre d'une acquisition multi-isotopique en médecine nucléaire, mettant par exemple en œuvre [99mTc] et [123I].

A partir de l'histogramme expérimental obtenu, on peut établir une estimation $\tilde{S}$ d'un histogramme dont chaque élément $\tilde{S}_j$ constitue une estimation du nombre de photons détectés satisfaisant au critère j. Dans cet exemple, le critère j correspond au fait que le photon provient d'une source émettant un photon d'énergie j et que ce photon n'a pas diffusé avant son interaction dans le matériau détecteur.

On obtient la valeur de cette estimation $\tilde{S}_j$ par l'équation suivante :

$$\tilde{S}_j = \sum_i P(S_j/X_i) X(i)$$

Avec :

- $\tilde{S}_j$ = estimation du nombre de photons détectés satisfaisant au critère j,

- P($S_j/X_i$) = probabilité d'acceptation d'un évènement de coordonnées i dans l'histogramme, sachant le critère j,
- $X(i)$ = valeur du point de coordonnées i dans l'histogramme expérimental mesuré. Dans cet exemple, l'indice i représente les coordonnées (QA, QK, ΣQ) de l'événement détecté.

Exemple n°2: on s'intéresse ici à la localisation des interactions dans le détecteur. Pour cela, les paramètres de chaque interaction sont les coordonnées, dans le plan P, du barycentre des différents signaux mesurés par les anodes élémentaires pondéré par leur excursion de charges. Le plan P correspond ici au plan parallèle aux électrodes. Cela est représenté à la figure 7. L'histogramme des événements est donc un diagramme défini par les coordonnées (xB, yB) du barycentre. L'étape de calibration consiste à faire n.p histogrammes en déplaçant une source collimatée à n.p de positions connues dans le champ de vue (n dans une direction, et p dans l'autre), en utilisant un collimateur fin devant la taille des électrodes. Ainsi, la position de l'interaction dans le plan P est directement obtenue à partir de la position de la source collimatée. Cet histogramme correspond à P(X/S), où X désigne les coordonnées (xB et yB) du barycentre des différents signaux mesurés par les anodes élémentaires, S la position de la source dans le même plan, en l'occurrence le plan de la cathode et celui de l'anode constituée par des anodes élémentaires coplanaires, c'est-à-dire un jeu de coordonnées (x, y).

La deuxième étape de la calibration consiste à faire une mesure de rayonnement issue d'une source étendue et uniforme, ce qui donne un histogramme P(X) correspond à la superposition de n.p sources présentes respectivement à tous les points d'échantillonnage (n dans une direction, et p dans l'autre), dont le nombre est arbitraire.

Les probabilités d'acceptation des résultats pour la présence d'une source aux coordonnées (x,y) s'écrivent P(S(x,y)/X), et elles sont égales comme précédemment à

$$P(S(x,y)/X) = \frac{P(X/S(x,y)) \times P(S)}{P(X)}.$$

On calcule ainsi n.p histogrammes de probabilités d'acceptation, un pour chacune des positions potentielles de la source, qu'on exploite en les multipliant successivement à l'histogramme des mesures: meilleure sera la corrélation entre l'histogramme de mesure et un des histogrammes de probabilités d'acceptation, c'est-à-dire plus nombreux et importants seront leurs produits de coefficients nettement différents de 0, plus on présumera que la source expérimentale aura une position proche de la source de calibration associée à ces probabilités d'acceptation. Les calculs de corrélation pourront être accomplis selon des modalités connues.

A partir de l'histogramme expérimental obtenu, on peut établir une estimation $\tilde{S}$ d'un histogramme dont chaque élément $\overline{\tilde{S}_j}$ constitue une estimation du nombre de photons détectés satisfaisant au critère j. Dans cet exemple, le critère j correspond au fait que le photon provient de la position de coordonnées j dans le champ de vue. Les coordonnées j comprennent ici la position de la source dans le plan de la cathode et de l'anode. Aussi, l'histogramme $\tilde{S}$ est un histogramme en deux dimensions. Il permet de déterminer la position de la source, cette dernière correspondant aux coordonnées j pour lesquelles le ou les valeurs $\overline{\tilde{S}_j}$ ont les valeurs les plus élevées.

On obtient la valeur de cette estimation $\overline{\tilde{S}_j}$ par l'équation suivante :

$$\overline{\tilde{S}_j} = \sum_i P(S_j/X_i)X(i)$$

Avec :

- $\overline{\tilde{S}_j}$ = estimation du nombre de photons détectés satisfaisant au critère j, j représentant alors les coordonnées de la source dans le plan considéré,
- P($S_j/X_i$) = probabilité d'acceptation d'un événement de coordonnées i dans l'histogramme, sachant le critère j,
- $X(i)$ = valeur du point de coordonnées i dans l'histogramme expérimental mesuré. Dans cet exemple, i représente les coordonnées ($X_S$, $Y_S$) du barycentre, précédemment défini, des différents signaux.

On comprendra que lorsque la calibration est réalisée en déplaçant la source selon trois dimensions, on peut obtenir un histogramme $\tilde{S}$ en trois dimensions, dont la valeur de chaque point $\tilde{S}_j$ est liée à la probabilité que la coordonnée j contienne la source observée.

Exemple n°3: il s'agit de la combinaison des deux exemples précédents : on cherche à déterminer la position de l'interaction dans le plan du détecteur, tout en écartant la contribution du rayonnement diffusé, l'ensemble composant le critère S. Les histogrammes des événements peuvent comprendre quatre paramètres : charge totale à l'anode ayant collecté le maximum de charges, charge totale à la cathode, et les deux coordonnées du barycentre des charges. Par barycentre des charges, on entend le point du plan des électrodes segmentées déterminé en effectuant le barycentre des électrodes élémentaires pondéré par l'excursion de charge mesurée par chacune d'entre elles.

Pour obtenir P(X/S), on acquiert les n.p histogrammes avec une source ponctuelle finement collimatée, dont on connaît la position. Pour obtenir P(X), on acquiert l'histogramme similaire avec une source uniforme étendue, générant une quantité de rayonnement diffusé représentative des conditions réelles d'acquisition. P(S) est connu, comme dans l'exemple n°1, par une estimation du rayonnement diffusé. L'estimation de position de la source est faite par les mêmes corrélations que dans l'exemple n°2.

A partir de l'histogramme expérimental obtenu, on peut établir une estimation $\tilde{S}$ d'un histogramme dont chaque élément $\tilde{S}_j$ constitue une estimation du nombre de photons détectés satisfaisant au critère j. Dans cet exemple, le critère j correspond au fait que le photon provient d'une source émettant un photon d'énergie j et que ce photon n'a pas diffusé avant son interaction dans le matériau détecteur.

On obtient la valeur de cette estimation $\tilde{S}_j$ par l'équation suivante :

$$\tilde{S}_j = \sum_i P(S_j / X_i) X(i)$$

Avec :

- $\tilde{S}_j$ = estimation du nombre de photons détectés satisfaisant au critère j. Dans cet exemple, le critère j est que le photon provient d'une position donnée ($r = n, y = p$), sans avoir diffusé avant d'interagir dans le détecteur,

- $P(S_j/X_i)$= probabilité d'acceptation d'un évènement de coordonnées i dans l'histogramme, sachant le critère j,

- $X(i)$ = valeur du point de coordonnées i dans l'histogramme expérimental mesuré. Dans cet exemple, i représente les coordonnées (QA, QK, $X_S$, $Y_S$) de l'événement détecté.

Ainsi, selon un mode de réalisation, l'invention est un procédé de traitement de données mesurées par un détecteur, comprenant les étapes suivantes :

- on détermine un histogramme expérimental X, classant chaque événement détecté selon une coordonnée i, i représentant des paramètres mesurés caractérisant l'événement. La valeur de l'histogramme à la coordonnée i est notée X(i) : elle correspond aux nombres d'événements détectés à cette coordonnée ;

- on détermine, pour les points de coordonnées i de l'histogramme, une probabilité d'acceptation $P(S_j/X_i)$, indiquant la probabilité de détecter un événement à la coordonnée i lorsque la source satisfait au critère j ;

- on détermine une estimation d'un histogramme $\tilde{S}$, dont chaque point $\tilde{S}_j$ représente une estimation du nombre de rayons détectés satisfaisant au critère j.

## Revendications

1. Procédé de caractérisation d'une source de rayonnement électromagnétique ou ionisant ayant un critère (j), le critère (j) étant un critère de rayonnement diffusé, et/ou de position de la source, éventuellement complété par l'énergie du rayonnement, le procédé comprenant les étapes de :

    - émission du rayonnement électromagnétique ou ionisant vers un détecteur semi-conducteur présentant au moins deux électrodes de polarisation comprenant une anode (15) et une cathode (14) ;
    - production de signaux électriques sous l'effet d'événements d'interaction dudit rayonnement dans ledit détecteur, chaque événement étant caractérisé, d'après des mesures des signaux électriques, par au moins un paramètre (i) ;
    - détermination d'un histogramme des événements (X) comprenant des valeurs (X(i)) selon le paramètre (i), les valeurs correspondant à des nombres d'événements détectés et le paramètre (i) correspondant à une coordonnée de l'histogramme ;
    - détermination, pour chaque valeur (X(i)) de l'histogramme (X) selon le paramètre (i), d'une probabilité d'acceptation $P(S_j/X_i)$, indiquant la probabilité de détecter un événement à la coordonnée sachant le critère (j),
    - combinaison de l'histogramme des événements et des probabilités d'acceptation pour donner un nouvel histogramme des événements corrigé d'après les probabilités d'acceptation;
    - **caractérisé en ce que** l'ensemble des probabilités d'acceptation est obtenu par deux calibrations où le détecteur est irradié par des rayonnements de calibration différant quant à un critère d'acceptation des événements, les rayonnements de calibration satisfaisant au critère (j) dans une première des calibrations et satisfaisant au critère (j) avec une probabilité P(S) dans une seconde des calibrations ;
    - les calibrations donnant deux histogrammes de calibration (P(X), P(X/S)) utilisés pour calculer les probabilités d'acceptation.

2. Procédé de caractérisation d'une source selon la revendication 1, **caractérisé en ce que** la probabilité $P(S/X)$ d'acceptation d'un événement ($X$) est établie d'après une probabilité du critère d'acceptation (S) du rayonnement, et égale à $\dfrac{P(X/S)P(S)}{P(X)}$, où $P(X/S)$ correspond à la probabilité d'occurrence de l'événement X pour du rayonnement présentant toujours le critère (S) dans la première calibration, P(S) correspond à la probabilité du critère (S) dans la seconde calibration et P(X) correspond à la probabilité d'occurrence de l'événement (X) dans la seconde calibration.

3. Procédé de caractérisation d'une source selon la revendication 1 ou 2, **caractérisé en ce que** l'histogramme des événements est corrigé en le multipliant point par point à l'ensemble des probabilités d'acceptation.

4. Procédé de caractérisation d'une source selon l'une quelconque des revendications 1 à 3, **caractérisé en ce qu'**il comprend encore une estimation du nombre de rayons détectés satisfaisant à un critère (j), cette estimation ($\tilde{S}_j$) étant obtenue en sommant les valeurs des points de l'histogramme corrigé par la probabilité d'acceptation correspondant à ce critère.

5. Procédé de caractérisation d'une source selon l'une quelconque des revendications précédentes, **caractérisé en ce que** le critère (j) de source de rayonnement comprend soit un jeu de coordonnées (x, y) de la source, soit au moins une énergie du rayonnement de la source.

6. Procédé de caractérisation d'une source selon l'une quelconque des revendications précédentes, **caractérisé en ce que** le critère (j) de source de rayonnement comprend un jeu de coordonnées (x, y) de la source et au moins une énergie du rayonnement de la source.

7. Procédé de caractérisation d'une source selon l'une quelconque des revendications précédentes, **caractérisé en ce que** l'histogramme corrigé est obtenu en pondérant l'histogramme des mesures par l'ensemble des probabilités d'acceptation, en faisant leur produit point par point.

**Patentansprüche**

1. Verfahren zur Charakterisierung einer Quelle elektromagnetischer oder ionisierender Strahlung mit einem Kriterium (j), wobei das Kriterium (j) ein Kriterium der Streustrahlung und/oder der Position der Quelle ist, gegebenenfalls ergänzt mit der Energie der Strahlung, wobei das Verfahren die Schritte umfasst:

    - Emission von elektromagnetischer oder ionisierender Strahlung an einen Halbleiterdetektor mit mindestens zwei Vorspannungselektroden, die eine Anode (15) und eine Kathode (14) umfassen;
    - Erzeugung von elektrischen Signalen unter der Wirkung von Ereignissen der Wechselwirkung der Strahlung in dem Detektor, wobei jedes Ereignis gemäß den Messungen der elektrischen Signale durch mindestens einen Parameter (i) charakterisiert ist;
    - Bestimmung eines Histogramms von Ereignissen (X), das Werte (X(i)) entsprechend dem Parameter (i) umfasst, wobei die Werte der Anzahl der erfassten Ereignisse entsprechen und der Parameter (i) einer Koordinate des Histogramms entspricht;
    - Bestimmung einer Akzeptanzwahrscheinlichkeit $P(S_j/X_i)$ für jeden Wert (X(i)) des Histogramms (X) gemäß dem Parameter (i), die die Wahrscheinlichkeit angibt, ein Ereignis an der Koordinate unter Kenntnis des Kriteriums (j) zu erkennen,
    - Kombination des Histogramms der Ereignisse und der Akzeptanzwahrscheinlichkeiten zu einem neuen Histogramm der Ereignisse, korrigiert um die Akzeptanzwahrscheinlichkeiten,

**dadurch gekennzeichnet, dass**
der Satz von Akzeptanzwahrscheinlichkeiten durch zwei Kalibrierungen erhalten wird, bei denen der Detektor mit Kalibrierstrahlungen bestrahlt wird, die sich in Bezug auf ein Kriterium für die Akzeptanz der Ereignisse unterscheiden, wobei die Kalibrierstrahlungen das Kriterium (j) in einer ersten der Kalibrierungen erfüllen und das Kriterium (j) mit einer Wahrscheinlichkeit P(S) in einer zweiten der Kalibrierungen erfüllen;

    - wobei die Kalibrierungen zwei Kalibrierhistogramme (P(X), P(X/S)) ergeben, die zur Berechnung der Akzeptanzwahrscheinlichkeiten verwendet werden.

2. Verfahren zur Charakterisierung einer Quelle nach Anspruch 1,
**dadurch gekennzeichnet, dass**
die Wahrscheinlichkeit P(S/X) der Akzeptanz eines Ereignisses (X) gemäß einer Wahrscheinlichkeit des Strahlungsakzeptanzkriteriums (S) festgelegt wird und gleich

$$\frac{P(X/S)P(S)}{P(X)}$$

ist, wobei P(X/S) der Wahrscheinlichkeit des Auftretens des Ereignisses X für Strahlung entspricht, die das Kriterium (S) bei der ersten Kalibrierung noch hat, P(S) der Wahrscheinlichkeit des Kriteriums (S) bei der zweiten Kalibrierung entspricht und P(X) der Wahrscheinlichkeit des Auftretens des Ereignisses (X) bei der zweiten Kalibrierung entspricht.

**3.** Verfahren zur Charakterisierung einer Quelle nach Anspruch 1 oder 2, **dadurch gekennzeichnet, dass** das Histogramm der Ereignisse korrigiert wird, indem es Punkt für Punkt mit dem Satz von Akzeptanzwahrscheinlichkeiten multipliziert wird.

**4.** Verfahren zur Charakterisierung einer Quelle nach einem der Ansprüche 1 bis 3, **dadurch gekennzeichnet, dass** es auch eine Schätzung der Anzahl der detektierten Strahlen umfasst, die ein Kriterium (j) erfüllen, wobei diese Schätzung ($\tilde{S}_j$) durch die Summe der Werte der Punkte des Histogramms, korrigiert um die Akzeptanzwahrscheinlichkeit, die diesem Kriterium entspricht, erhalten wird.

**5.** Verfahren zur Charakterisierung einer Quelle nach einem der vorangehenden Ansprüche, **dadurch gekennzeichnet, dass** das Strahlungsquellenkriterium (j) entweder einen Satz von Koordinaten (x, y) der Quelle oder zumindest eine Strahlungsenergie der Quelle umfasst.

**6.** Verfahren zur Charakterisierung einer Quelle nach einem der vorangehenden Ansprüche, **dadurch gekennzeichnet, dass** das Strahlungsquellenkriterium (j) einen Satz von Koordinaten (x, y) der Quelle und zumindest eine Strahlungsenergie der Quelle umfasst.

**7.** Verfahren zur Charakterisierung einer Quelle nach einem der vorangehenden Ansprüche, **dadurch gekennzeichnet, dass** das korrigierte Histogramm durch Gewichtung des Histogramms der Messungen mit dem Satz von Akzeptanzwahrscheinlichkeiten erhalten wird, indem ihr Produkt Punkt für Punkt gebildet wird.

**Claims**

**1.** A method for characterizing a source of electromagnetic or ionizing radiation having a criterion (j), the criterion (j) being a criterion of a diffused radiation, and/or of a position of the source, which may be completed by the energy of the radiation, the method comprising the step of:

    - emitting the electromagnetic or ionizing radiation towards a semiconductor detector comprising at least two polarizing electrodes comprising an anode (15) and a cathode (14);
    - generating electric signals under the effect of events of interaction of said radiation in said detector, each event being characterized, based on measurements of the electric signals, by at least one parameter (i);

    - determining a histogram of events (X) including values (X(i)) according to the parameter (i), the values corresponding to numbers of detected events and the parameter (i) corresponding to a coordinate of the histogram;
    - determining, for each value (X(i)) of the histogram (X) according to the parameter (i), a probability of acceptance P(Sj/Xi), indicating a probability to detect an event at the coordinate when the criterion (j) is met;
    - combining the histogram of the events and the probabilities of acceptance to give a new histogram of events corrected according to the probabilities of acceptance;
    - **characterized in that** the array of the probabilities of acceptance is obtained by two calibration in which the detector is irradiated by calibration radiations differing as to a criterion of acceptance of the events, the calibration radiations complying with the criterion (j) in a first of the calibrations and complying with the criterion (j) with a probability P(S) in a second of the calibrations;
    - the calibrations giving two calibration histograms (P(X), P(X/S)) used for calculating the probabilities of acceptance.

**2.** The method for characterising a source according to claim 1, **characterized in that** the acceptance probability $P(S/X)$ of an event ($X$) is determined according to a probability of the radiation acceptance criterion (S) and equal to $\dfrac{P(X/S)P(S)}{P(X)}$, where $P(X/S)$ corresponds to the probability of occurrence of event X for radiation always having criterion (S) in the first calibration, $P(S)$ corresponds to the probability of criterion (S) in the second calibration and P(X) corresponds to the probability of occurrence of event (X) in the second calibration.

**3.** The method for characterising a source according to claim 1 or 2, **characterized in that** the histogram of events is corrected by multiplying it point by point with the set of acceptance probabilities.

**4.** The method for characterising a source according to any of claims 1 to 3, **characterized in that** it further comprises an estimation of the number of detected rays meeting a criterion (j), this estimation ($\tilde{S}_j$) being obtained by summing the values of the points of the histogram corrected by the acceptance probability corresponding to this criterion.

**5.** The method for characterising a source according to any of the previous claims, **characterized in that** the radiation source criterion (j) includes either a set of coordination (x, y) of the source, or at least one energy of radiation of the source.

6. The method for characterising a source according to any of the previous claims, **characterized in that** the radiation source criterion (j) includes a set of coordinate (x, y) of the source and at least one energy of radiation of the source.

7. The method for characterising a source according to any of the previous claims, **characterized in that** the corrected histogram is obtained by weighting the measurements histogram with the array of the probabilities of acceptance, by point by point multiplications.

FIG. 1

FIG. 2

FIG. 3

FIG. 4

| | |
|---|---|
| E1 Mesures | E3 Calibration  E4 Informations |
| E2 Histogramme des mesures | E5 Probabilités d'acceptations des mesures |
| | E6 Histogramme des événements |

# FIG. 5

## FIG. 6

## FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5854489 A
- EP 0703751 A
- US 1058128 A
- EP 1004040 A
- EP 1598680 A
- EP 1037070 A
- EP 1739456 A
- US 6002741 A
- US 6169287 B
- WO 2007144589 A
- DE 19721323 A

**Littérature non-brevet citée dans la description**

- **WARBURTON.** An approach to sub-pixel spatial resolution in room temperature x-ray detector arrays with good energy resolution. *Materials Research Society symposium proceedings,* 1997, vol. 487, 531-536
- **JAECHEON KIM.** Three-dimensional signal correction on U1traPeRL CZT detectors. *Nuclear Science Symposium Conference Record, 2007. NSS'07.IEEE,* 1289-1293